# EUROPEAN PATENT APPLICATION

(11) **EP 4 793 839 A1**
(43) Date of publication of application: **19.08.2026**
(21) Application number: 26155997.5
(22) Date of filing: 03.02.2026
(51) Int. Cl.: G06N 10/40

(54) **COMPUTER PROGRAM, QUBIT CONTROL METHOD, AND INFORMATION PROCESSING APPARATUS**

(30) Priority: 05.02.2025 JP 2025017954
(71) Applicant: Fujitsu Limited, Kawasaki-shi, Kanagawa 211-8588 (JP)
(72) Inventor: ABE, Toru, Kawasaki-shi, 211-8588 (JP); SUGIYAMA, Takanori, Kawasaki-shi, 211-8588 (JP)
(74) Representative: Haseltine Lake Kempner LLP

(57) **Abstract**

An information processing apparatus generates a waveform function that defines a temporal change in amplitude in a first interval of a rise time of a pulse signal using a first polynomial having a first parameter as a coefficient and defines a temporal change in the amplitude in a second interval of the rise time using a second polynomial having a second parameter as a coefficient. The information processing apparatus determines a waveform using the waveform function by assigning a first parameter value group to the parameter group. The information processing apparatus changes a parameter value group assigned to the parameter group, from the first parameter value group to a second parameter value group, based on a result of quantum computation performed by a quantum computer using a pulse signal having the waveform.

## Description

### FIELD

The embodiments discussed herein relate to a computer program, a qubit control method, and an information processing apparatus.

### BACKGROUND

Quantum computers may perform quantum computation, such as quantum gates and measurements, by irradiating qubits with pulse signals. A quantum computer may have errors in which operations performed on qubits deviate from their ideal values due to factors such as hardware manufacturing variations and the operating environment. Therefore, the quantum computer may have parameters for controlling the waveforms of pulse signals. When using the quantum computer, a user may perform calibration to adjust the parameter values so as to mitigate errors.

For example, there is a pulse signal control technique of dividing the temporal width of a pulse signal from the start to the end into a plurality of small intervals and generating a rectangular wave for each small interval. This pulse signal control technique approximates the overall waveform of the pulse signal by a plurality of continuous rectangular waves. This pulse signal control technique enables flexible adjustment of the waveform of the pulse signal by changing the amplitude for each small interval.

There is also a technique for shaping the steep rising and falling edges of an input pulse signal into a smooth profile. Further, there is a technique that drives a magnetron to produce a narrow transmission pulse signal having steep rising and falling edges. Still further, there is a technique that differentiates an input pulse signal to form a Gaussian pulse signal, and differentiates the Gaussian pulse signal to form an ultra-wideband pulse signal. In addition, there is a technique that generates analog waveforms that are used to generate pulse signals to be applied to qubits, using a plurality of classical processors in parallel. See, for example, the following literatures.
Japanese Laid-open Patent Publication No. 05-191230
Japanese Laid-open Patent Publication No. 2003-87099
U.S. Patent Application Publication No. 2007/0237208
U.S. Patent Application Publication No. 2023/0359916
Navin Khaneja, Timo Reiss, Cindie Kehlet, Thomas Schulte-Herbruggen, and Steffen J. Glaser, "Optimal Control of Coupled Spin Dynamics: Design of NMR Pulse Sequences by Gradient Ascent Algorithms", Journal of Magnetic Resonance, Volume 172, Issue 2, pages 296-305, February 2005

From the viewpoint of improving the accuracy of quantum computation, it is preferable that the temporal width of a pulse signal be short so that the decay of information held by a qubit is suppressed. It is also preferable that the rising edge of the pulse signal not be excessively steep so that unintended high-frequency components are suppressed.

To this end, it may be possible to employ a method of flexibly adjust the waveform of a pulse signal using a large number of parameters, as in the technique described in the aforementioned literature "Optimal Control of Coupled Spin Dynamics: Design of NMR Pulse Sequences by Gradient Ascent Algorithms". However, as the number of parameters increases, the parameter search space becomes larger, and the calibration cost increases.

### SUMMARY

In one aspect, it is desirable for the present disclosure to reduce the number of parameters for a pulse signal that controls a qubit.

In one aspect, there is provided a computer program that causes a computer to perform a process including: generating a waveform function defining a waveform of a pulse signal, the waveform function defining a temporal change in amplitude in a first interval of a rise time of the pulse signal using a first polynomial and defining a temporal change in the amplitude in a second interval of the rise time using a second polynomial, the first polynomial including a first parameter as a coefficient, the second polynomial including a second parameter as a coefficient; determining a first waveform using the waveform function by assigning a first parameter value group to a parameter group including the first parameter and the second parameter; and changing a parameter value group assigned to the parameter group, from the first parameter value group to a second parameter value group, based on a result of quantum computation performed by a quantum computer using a first pulse signal having the first waveform.

### BRIEF DESCRIPTION OF DRAWINGS

Reference will now be made, by way of example only, to the following drawings, in which:
FIG. 1 is a diagram for describing an information processing apparatus according to a first embodiment;
FIG. 2 illustrates an example of hardware of an information processing system according to a second embodiment;
FIG. 3 illustrates examples of the operations of quantum gates on a Bloch sphere;
FIG. 4 illustrates examples of waveforms of microwave pulse signals;
FIG. 5 illustrates an example of energy relaxation of a qubit;
FIG. 6 illustrates an example of crosstalk between qubits;
FIG. 7 illustrates an example of leakage transition of a qubit;
FIG. 8 illustrates examples of the rising edges of microwave pulse signals;
FIG. 9 illustrates examples of adjusting the rising edge of a microwave pulse signal;
FIG. 10 illustrates examples of a main pulse signal and a correction pulse signal;
FIG. 11 illustrates examples of movement of a vertex of a simplex;
FIG. 12 illustrates an example of a parameter table;
FIG. 13 illustrates an example of a comparison between the waveforms of microwave pulse signals;
FIG. 14 is a block diagram illustrating an example of the functions of an information processing apparatus;
FIG. 15 is a block diagram illustrating an example of hardware of a pulse generation unit;
FIG. 16 is a flowchart illustrating an example procedure for pulse waveform control;
FIG. 17 is a flowchart illustrating an example procedure for parameter search; and
FIG. 18 is a flowchart illustrating a continuation of the example procedure for the parameter search.

### DESCRIPTION OF EMBODIMENTS

Hereinafter, embodiments will be described with reference to the drawings.

### (a) First Embodiment

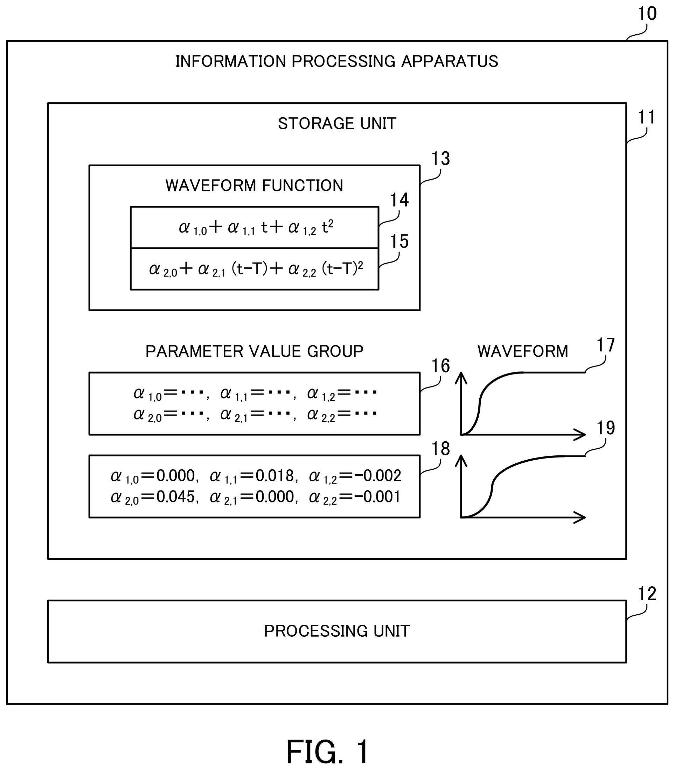

FIG. 1 is a diagram for describing an information processing apparatus according to a first embodiment. The information processing apparatus 10 according to the first embodiment calibrates the waveforms of pulse signals with which a quantum computer irradiates qubits. The information processing apparatus 10 is, for example, a von Neumann classical computer. The information processing apparatus 10 may be a client apparatus or a server apparatus. The information processing apparatus 10 may be referred to as a computer or a qubit control apparatus.

The information processing apparatus 10 includes a storage unit 11 and a processing unit 12. The storage unit 11 may be a volatile memory such as a random access memory (RAM). The storage unit 11 may be a non-volatile storage such as a hard disk drive (HDD) or a solid state drive (SSD).

The processing unit 12 is, for example, a processor such as a central processing unit (CPU), a graphics processing unit (GPU), or a digital signal processor (DSP). However, the processing unit 12 may include an electronic circuit such as an application specific integrated circuit (ASIC) or a field programmable gate array (FPGA). The processor executes, for example, a program stored in a memory such as a RAM. The processor may be referred to as processor circuitry. A set of processors may be referred to as a multiprocessor or simply as a "processor". Different processes among a plurality of processes to be described below may be executed by different processors.

The storage unit 11 stores a waveform function 13. The waveform function 13 defines the waveform of a pulse signal. The pulse signal implements, for example, a quantum gate that acts on a qubit or a measurement of a qubit. The waveform corresponds to, for example, an envelope of a microwave pulse signal, and represents a temporal change in the amplitude of the microwave pulse signal.

The waveform function 13 includes polynomials 14 and 15. The polynomial 14 represents a temporal change in the amplitude in a first interval of the rise time of the pulse signal. The polynomial 14 includes a variable representing a time point. The polynomial 14 also has one or more first parameters as coefficients. The polynomial 14 is, for example, a quadratic expression or a cubic expression. The quadratic expression includes a zero-degree term, a first-degree term, and a second-degree term for the variable representing a time point, and has three coefficients. The cubic expression includes a zero-degree term, a first-degree term, a second-degree term, and a third-degree term for the variable representing a time point, and has four coefficients.

The polynomial 15 represents a temporal change in the amplitude in a second interval of the rise time. The polynomial 15 includes a variable representing a time point. The polynomial 15 also has one or more second parameters as coefficients. The polynomial 15 is, for example, a quadratic expression or a cubic expression. The second interval is, for example, an interval after the first interval. The first interval and the second interval may be continuous, and the rise time may be divided into two intervals. Alternatively, the rise time may be divided into three or more intervals, and the waveform function 13 may include three or more polynomials. Further, the waveform function 13 may define the amplitude of an interval other than the rise time, using another polynomial.

The processing unit 12 generates the waveform function 13. The processing unit 12 assigns a parameter value group 16 to a parameter group including the one or more first parameters and the one or more second parameters. Thus, the processing unit 12 determines a waveform 17 using the waveform function 13. In the first interval and the second interval, the amplitude monotonically increases. The waveform during the fall time may be either symmetrical or asymmetrical to the waveform during the rise time.

The processing unit 12 acquires a result of quantum computation performed by the quantum computer using a pulse signal having the waveform 17. To this end, the processing unit 12 may control the quantum computer to irradiate a qubit with the pulse signal having the waveform 17. For example, the processing unit 12 transmits waveform data representing the waveform 17 to the quantum computer. The processing unit 12 reads, from the quantum computer, the value of the qubit after the irradiation of the pulse signal.

The processing unit 12 changes, based on the acquired result, a parameter value group assigned to the parameter group, from the parameter value group 16 to a parameter value group 18. Accordingly, the processing unit 12 changes the waveform of the pulse signal from the waveform 17 to a waveform 19 using the waveform function 13. The parameter group may include a third parameter representing a time point corresponding to the boundary between the first interval and the second interval. Therefore, the processing unit 12 may set different time points for the boundary in the waveform 17 and the waveform 19. The processing unit 12 may also change the degree of at least one of the polynomials 14 and 15.

The processing unit 12 may output the parameter value group 18 or may output waveform data representing the waveform 19. The processing unit 12 may store the parameter value group 18 or the waveform data in a non-volatile storage, may display the parameter value group 18 or the waveform data on a display device, or may transmit the parameter value group 18 or the waveform data to another information processing apparatus. In addition, the processing unit 12 may control the quantum computer to irradiate the qubit with a pulse signal having the waveform 19. For example, the processing unit 12 transmits waveform data representing the waveform 19 to the quantum computer.

In selecting the parameter value group 18, the processing unit 12 may change the parameter value group so that an error representing a deviation of a result of the quantum computation from an ideal value is reduced. In the case where the pulse signal implements a quantum gate, the processing unit 12 may calculate the fidelity of the quantum gate from a measurement result of the qubit irradiated with the pulse signal, and may change the parameter value group so as to improve the fidelity. The processing unit 12 may search for an optimal parameter value group by iteratively performing a calculation process of calculating the fidelity and an update process of changing the parameter value group.

In the waveform 19, it is preferable that the rate of increase in the amplitude in the second half of the rise time be lower than that in the first half of the rise time. The processing unit 12 may select the parameter value group 18 such that the rate of increase in the amplitude in the second interval, which is defined by the polynomial 15, is lower than that in the first interval, which is defined by the polynomial 14. The rate of increase in the first interval is, for example, an average slope of the waveform, and is a value obtained by dividing the amount of increase in the amplitude in the first interval by the temporal width of the first interval. The rate of increase in the second interval is, for example, a value obtained by dividing the amount of increase in the amplitude in the second interval by the temporal width of the second interval.

The pulse signal to be applied to the qubit may include a first component and a second component orthogonal to the first component. The first component may be referred to as an in-phase component or an I component. The second component may be referred to as a quadrature-phase component or a Q component. The first component represents the waveform 17 or the waveform 19. The second component represents a differentiated waveform obtained by differentiating the waveform 17 or the waveform 19.

As described above, the information processing apparatus 10 according to the first embodiment generates the waveform function 13 that defines the waveform of a pulse signal. The waveform function 13 defines a temporal change in the amplitude in a first interval of the rise time of the pulse signal, using the polynomial 14 having a first parameter as a coefficient. Further, the waveform function 13 defines a temporal change in the amplitude in a second interval of the rise time, using the polynomial 15 having a second parameter as a coefficient.

The information processing apparatus 10 determines the waveform 17 using the waveform function 13 by assigning the parameter value group 16 to a parameter group including the first parameter and the second parameter. The information processing apparatus 10 changes the parameter value group assigned to the parameter group, from the parameter value group 16 to the parameter value group 18, based on the result of quantum computation performed by the quantum computer using a pulse signal having the waveform 17.

With the above approach, the information processing apparatus 10 is able to flexibly adjust the waveform of the pulse signal with a small number of parameters. This reduces the calibration cost to adjust the parameter values so that errors in the quantum computation are reduced. In addition, the information processing apparatus 10 is able to easily adjust the waveform of the pulse signal so that the temporal width is short and the rising edge is not excessively steep. This enables the quantum computer to exhibit an improved accuracy of quantum computation. Further, since the coefficients in the polynomials 14 and 15 are parameters, the predictability of a change in the waveform resulting from a change in the parameter values is improved. Therefore, the information processing apparatus 10 is able to streamline the calibration.

### (b) Second Embodiment

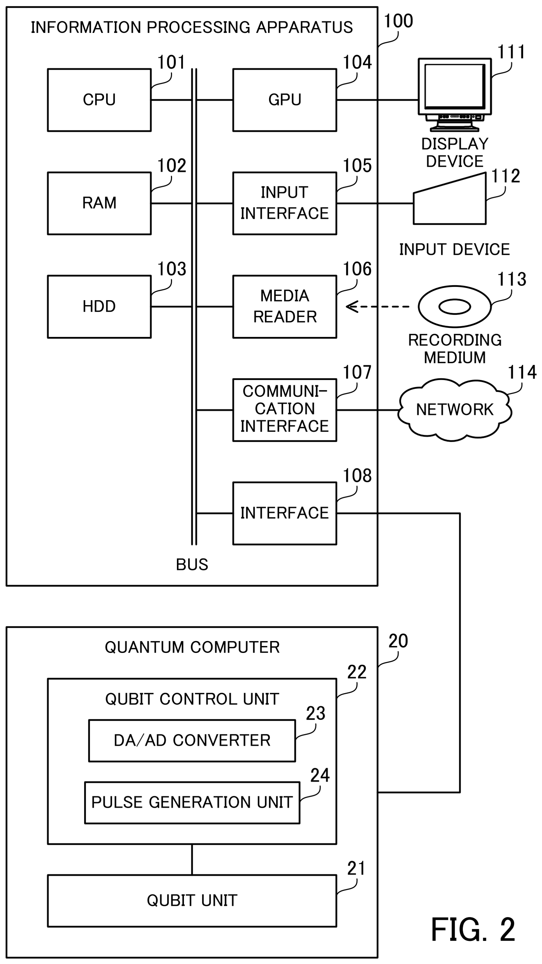

FIG. 2 illustrates an example of hardware of an information processing system according to a second embodiment. The information processing system according to the second embodiment includes an information processing apparatus 100 and a quantum computer 20. The information processing apparatus 100 is a von Neumann classical computer. The information processing apparatus 100 calibrates quantum gates and measurements that are implemented using microwave pulse signals. The information processing apparatus 100 corresponds to the information processing apparatus 10 of the first embodiment.

The information processing apparatus 100 includes a CPU 101, a RAM 102, an HDD 103, a GPU 104, an input interface 105, a media reader 106, a communication interface 107, and an interface 108. The CPU 101 corresponds to the processing unit 12 of the first embodiment. The RAM 102 or the HDD 103 corresponds to the storage unit 11 of the first embodiment.

The CPU 101 is a processor that executes program instructions. The CPU 101 loads a program and data from the HDD 103 into the RAM 102 and executes the program. The information processing apparatus 100 may include a plurality of processors.

The RAM 102 is a volatile semiconductor memory that temporarily stores a program executed by the CPU 101 and data used by the CPU 101 during its operation. The information processing apparatus 100 may include a volatile memory of a type other than the RAM.

The HDD 103 is a non-volatile storage that stores software programs such as an operating system, middleware, and application software, and other data. The information processing apparatus 100 may include another type of non-volatile storage such as an SSD or a flash memory.

The GPU 104 performs image processing in cooperation with the CPU 101, and outputs images to a display device 111 connected to the information processing apparatus 100. The display device 111 is, for example, a cathode ray tube (CRT) display, a liquid crystal display, an organic electro luminescence (EL) display, or a projector. The GPU 104 may be used as a general purpose computing on graphics processing unit (GPGPU). The GPU 104 is able to execute a program in accordance with an instruction from the CPU 101. The information processing apparatus 100 may include a volatile semiconductor memory other than the RAM 102 as a GPU memory.

The input interface 105 receives input signals from an input device 112 connected to the information processing apparatus 100. The input device 112 is, for example, a mouse, a touch panel, or a keyboard. A plurality of input devices may be connected to the information processing apparatus 100.

The media reader 106 is a reading device that reads a program and data recorded on a recording medium 113. The recording medium 113 is, for example, a magnetic disk, an optical disc, or a semiconductor memory. Magnetic disks include a flexible disk (FD) and an HDD. Optical discs include a compact disc (CD) and a digital versatile disc (DVD). The media reader 106 copies a program and data read from the recording medium 113 to another storage device such as the RAM 102 or the HDD 103. The read program may be executed by the CPU 101.

The recording medium 113 may be a portable recording medium. The recording medium 113 may be used for distribution of programs and data. The recording medium 113 and the HDD 103 may be referred to as computer-readable storage media.

The communication interface 107 communicates with other information processing apparatuses via a network 114. The communication interface 107 may be a wired communication interface connected to a wired communication device such as a switch or a router, or may be a wireless communication interface connected to a wireless communication device such as a base station or an access point.

The interface 108 is connected to the quantum computer 20. The interface 108 transmits a command to the quantum computer 20 in response to an instruction from the CPU 101. The interface 108 receives the execution result of the command from the quantum computer 20 and stores the received execution result in the RAM 102.

The quantum computer 20 includes a qubit unit 21 and a qubit control unit 22. The qubit unit 21 includes a plurality of qubits. The qubits are, for example, superconducting qubits. The plurality of qubits are arranged, for example, in a lattice. Each qubit is irradiated with a microwave pulse signal via a control signal line. When a qubit is irradiated with a microwave pulse signal corresponding to a quantum gate, the quantum state of the qubit is changed. In addition, when a qubit is irradiated with a microwave pulse signal corresponding to a measurement, the value of the qubit is read out as a reflected signal.

The qubit control unit 22 performs quantum computation, such as execution of quantum gates and measurements, by irradiating the qubit unit 21 with microwave pulse signals. The qubit control unit 22 includes a digital-to-analog/analog-to-digital (DA/AD) converter 23 and a pulse generation unit 24.

The DA/AD converter 23 includes a digital-to-analog converter (DAC) that converts a digital signal into an analog signal. The DA/AD converter 23 also includes an analog-to-digital converter (ADC) that converts an analog signal into a digital signal. Although the microwave pulse signals applied to the qubit unit 21 are analog signals, the waveform control is performed as digital processing.

The pulse generation unit 24 changes the waveforms of microwave pulse signals to be applied to the qubit unit 21, from predetermined values in accordance with commands from the information processing apparatus 100. A command may include parameter values related to the waveform, such as pulse length, amplitude, phase, and others. Alternatively, a command may include waveform data representing a waveform itself.

The pulse generation unit 24 irradiates the qubit unit 21 with microwave pulse signals according to commands from the information processing apparatus 100. Thus, quantum computation is performed. A microwave pulse signal corresponding to a quantum gate acts on a qubit to change its quantum state. A microwave pulse signal corresponding to a measurement reads the value of a qubit. A single measurement on a qubit probabilistically reads out a value of 0 or 1, depending on the quantum state. The pulse generation unit 24 transmits the measurement result to the information processing apparatus 100.

Qubits and quantum gates will now be described. A bit of a classical computer holds one value at one point in time. For example, two bits may represent any one of 00, 01, 10, and 11. On the other hand, a qubit is able to hold, at one point in time, a superposition state in which a plurality of values are superposed. For example, two qubits represent a superposition of |00〉, |01〉, |10〉, and |11〉.

A quantum state represented by two qubits is expressed by Expression (1). In Expression (1), a, b, c, and d are complex numbers representing probability amplitudes and satisfy the condition defined by Expression (2). The square of the absolute value of a certain probability amplitude indicates the occurrence probability of the corresponding value. Here, a is the probability amplitude of |00〉, b is the probability amplitude of |01〉, c is the probability amplitude of |10〉, and d is the probability amplitude of |11〉. N qubits are able to represent 2^{N} values simultaneously. $a \left|00\right〉 + b \left|01\right〉 + c \left|10\right〉 + d \left|11\right〉$ ${a}^{2} + {b}^{2} + {c}^{2} + {d}^{2} = 1$

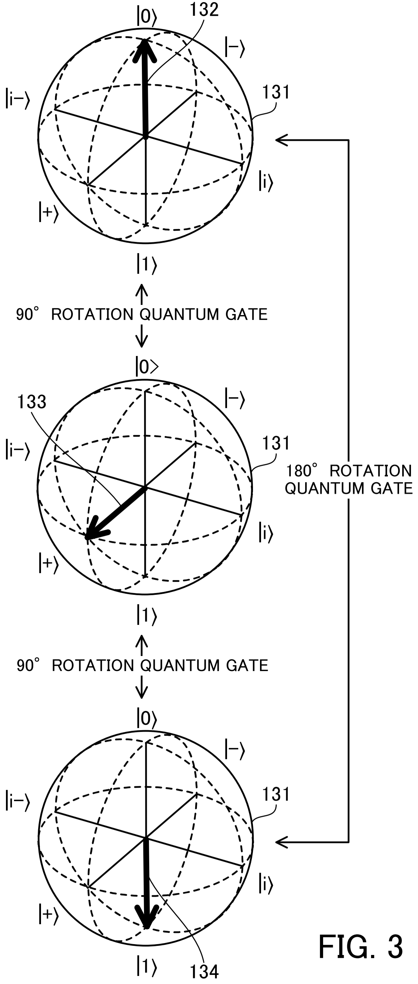

FIG. 3 illustrates examples of the operations of quantum gates on a Bloch sphere. The quantum state of a single qubit is expressed as a superposition of |0〉 and |1〉 as presented in Expression (3). In Expression (3), a is the probability amplitude of |0〉, and b is the probability amplitude of 11). Considering the range of values that a and b are able to take, the quantum state may also be expressed using angles θ and φ as presented in Expression (3). θ is a real number in the range of 0 to π, inclusive, and φ is a real number in the range of 0 to 2π, inclusive. $\left|ψ\right〉 = a \left|0\right〉 + b \left|1\right〉 = cos \left(θ/2\right) \left|0\right〉 + exp \left(iϕ\right) sin \left(θ/2\right) \left|1\right〉$

A Bloch sphere 131 represents, in three dimensions, a space to which the quantum state of a single qubit belongs. One Bloch vector from the origin of the Bloch sphere 131 to a point on the surface of the Bloch sphere 131 represents a quantum state. A Bloch vector 132 represents |0〉 and corresponds to θ = 0 and φ = 0. A Bloch vector 133 represents a quantum state expressed by Expression (4) and corresponds to θ = π/2 and φ = 0. A Bloch vector 134 represents |1〉 and corresponds to θ = π and φ = 0. $\frac{1}{\sqrt{2}} \left|0\right〉 + \frac{1}{\sqrt{2}} \left|1\right〉$

A 90° rotation quantum gate is used for the transformation between the Bloch vector 132 and the Bloch vector 133. Similarly, the 90° rotation quantum gate is used for the transformation between the Bloch vector 133 and the Bloch vector 134. The 90° rotation quantum gate rotates the Bloch vectors 132 and 133 by π/2 around the Y-axis. A 180° rotation quantum gate is used for the transformation between the Bloch vector 132 and the Bloch vector 134. The 180° rotation quantum gate is, for example, an X gate represented by a Pauli X matrix.

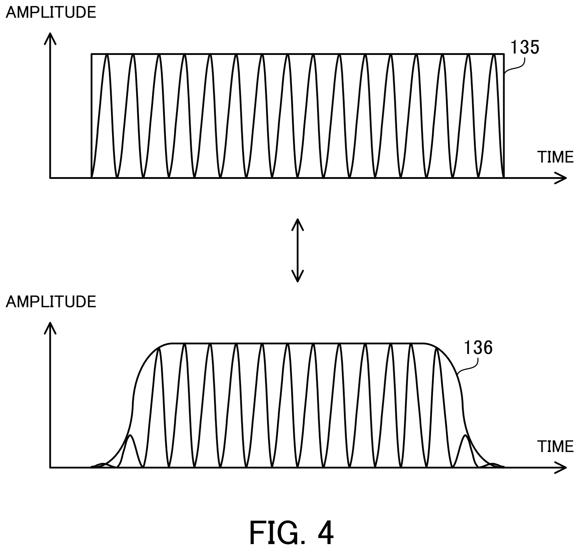

FIG. 4 illustrates examples of waveforms of microwave pulse signals. One physical implementation of quantum gates and measurements is microwave pulses. As described above, the quantum computer 20 irradiates a qubit with a microwave pulse signal. The total area of the waveform of a microwave pulse signal corresponds to the total energy that is applied to a qubit. In a microwave pulse signal corresponding to a quantum gate, the total area corresponds to a rotation angle of the quantum state.

It is ideal that the quantum computer 20 irradiates a qubit with a microwave pulse signal 135 having a rectangular envelope. However, it is difficult for the quantum computer 20 to generate perfectly rectangular waves due to physical limitations. In practice, the quantum computer 20 generates a microwave pulse signal 136 having smooth rising and falling edges.

Due to the difficulty in adjusting the rising and falling edges, the quantum computer 20 may have an error in which an operation on a qubit deviates from its ideal value. The error may be affected by manufacturing variations in the quantum computer 20, and may also be affected by the operating environment of the quantum computer 20. Therefore, the quantum computer 20 is configured to be able to change the waveform of a microwave pulse signal so as to reduce such an error. Here, factors related to the waveform of a microwave pulse signal that may degrade the accuracy of quantum computation will be described.

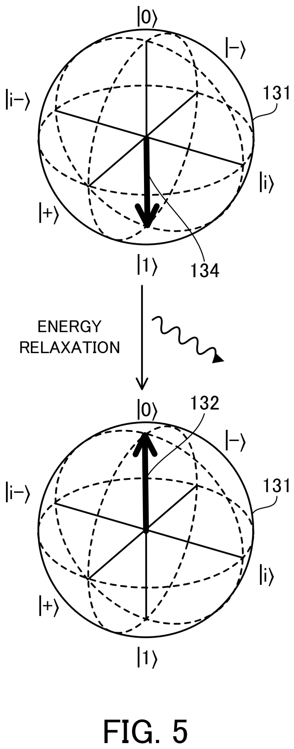

FIG. 5 illustrates an example of energy relaxation of a qubit. A qubit has a coherence time, which is the time interval during which the qubit is able to retain its quantum mechanical properties. Even when the qubit receives a microwave pulse signal and transitions to a higher-energy quantum state, the qubit gradually releases energy over time and loses information. Superconducting qubits have a coherence time of, for example, approximately several tens to several hundreds of microseconds.

For example, in the Bloch sphere 131, 11) indicated by the Bloch vector 134 described above has a higher energy level than |0〉 indicated by the Bloch vector 132. Even when the qubit transitions from |0〉 to |1〉 by irradiation with a microwave pulse signal, the qubit eventually returns from |1〉 to |0〉 due to energy relaxation, in which energy is gradually released.

In order to properly perform quantum computation, the quantum computer 20 needs to complete operations on the qubit within the coherence time. Therefore, the microwave pulse signal preferably has a short temporal width, so that the accuracy is maintained even when various operations are performed on the qubit.

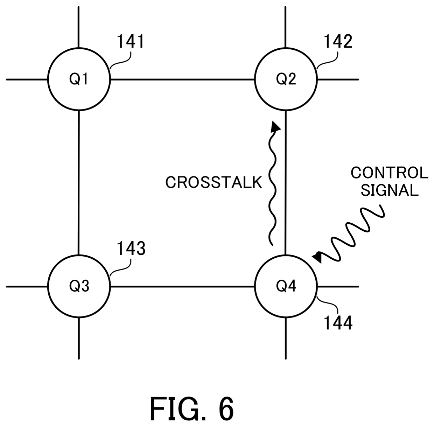

FIG. 6 illustrates an example of crosstalk between qubits. Crosstalk refers to unintended interactions between adjacent qubits. Crosstalk includes classical crosstalk and quantum crosstalk. In classical crosstalk, a qubit affects the quantum states of surrounding qubits through classical electromagnetic interactions. In quantum crosstalk, a qubit affects the quantum states of surrounding qubits through quantum mechanical interactions.

For example, the qubit unit 21 includes qubits 141, 142, 143, and 144 arranged in a lattice. The qubit 141 and the qubit 142 are adjacent to each other, the qubit 141 and the qubit 143 are adjacent to each other, the qubit 142 and the qubit 144 are adjacent to each other, and the qubit 143 and the qubit 144 are adjacent to each other.

The quantum computer 20 irradiates the qubit 144 with a microwave pulse signal as a control signal. Then, due to crosstalk, information on the quantum state may leak from the qubit 144 to the qubit 142. From the viewpoint of suppressing the crosstalk, it is preferable that the amplitude (signal strength) of the microwave pulse signal not be excessively high. In addition, since it is preferable that the microwave pulse signal include a small amount of unwanted high frequency components, it is preferable that the rising edge of the microwave pulse signal not be excessively steep.

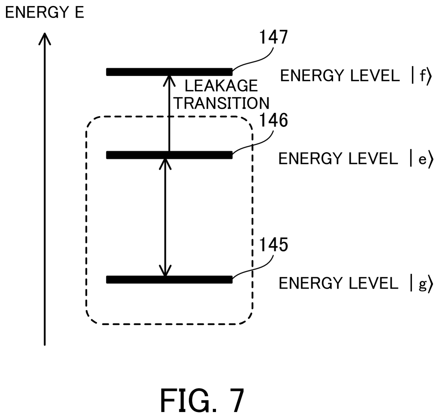

FIG. 7 illustrates an example of leakage transition of a qubit. A qubit has an energy corresponding to any one of a plurality of discrete energy levels. In the design of the quantum computer 20, one energy level is used as 10), and another energy level (for example, an energy level higher than 10)) is used as 11). A microwave pulse signal is designed such that the qubit transitions between two desired energy levels. However, there may be a risk that a microwave pulse signal may cause a qubit to transition to another undesired energy level, depending on the waveform thereof. This transition may be referred to as a leakage transition.

For example, an energy level 145 indicates |g〉. An energy level 146 indicates le〉 and corresponds to an energy higher than that of the energy level 145. An energy level 147 indicates |f〉 and corresponds to an energy higher than that of the energy level 146. The energy level 145 is used as |0〉 and the energy level 146 is used as 11).

In the case where the amplitude of a microwave pulse signal is excessively high, the qubit may resonate with the energy level 147 and transition to the energy level 147. In addition, in the case where the microwave pulse signal includes large high-frequency components because the rising edge of the microwave pulse signal is excessively steep, the qubit may resonate with the energy level 147 and transition to the energy level 147. As a result, the accuracy of quantum computation may be degraded. From the viewpoint of suppressing the leakage transition, it is preferable that the amplitude of the microwave pulse signal not be excessively high. It is also preferable that the rising edge of the microwave pulse signal not be excessively steep.

Therefore, it may be desired that the information processing apparatus 100 adjusts the waveform of the microwave pulse signal such that the entire temporal width (pulse width) is short and the rising edge is not excessively steep. In view of this, in order to flexibly adjust the waveform, the information processing apparatus 100 may optimize the waveform using a waveform function having a large number of parameters, as in the technique described in the above-mentioned literature "Optimal Control of Coupled Spin Dynamics: Design of NMR Pulse Sequences by Gradient Ascent Algorithms". However, increasing the number of parameters expands the parameter search space. This may cause an increase in the calibration load and the calibration time.

In addition, in a waveform function having a large number of parameters, the relationship between the parameter values and the waveform becomes complicated, which leads to a reduction in the predictability of a change in the waveform resulting from a change in the parameter values. This may cause an increase in the calibration load and the calibration time. In addition, the use of such a waveform function may obscure the calibration strategy.

To deal with this, the information processing apparatus 100 according to the second embodiment generates the waveform of a microwave pulse signal using a waveform function including a plurality of polynomials. The information processing apparatus 100 divides the rise time into two intervals, namely a front interval and a rear interval, and defines a waveform for the front interval and a waveform for the rear interval using different polynomials. This waveform function allows the waveform in the first half of the rise time and the waveform in the second half of the rise time to be asymmetrical. The information processing apparatus 100 optimizes the polynomial coefficients so that the slope of the waveform in the front interval is large and the slope of the waveform in the rear interval is small.

By using the polynomials in the waveform function, the information processing apparatus 100 is able to represent the waveform with a small number of parameters and suppress the expansion of the parameter search space. Therefore, the information processing apparatus 100 is able to reduce the calibration load and shorten the calibration time. Further, since the polynomial coefficients serve as parameters, the relationship between the parameter values and the waveform becomes simple. This improves the predictability of a change in the waveform resulting from a change in the parameter values, and streamlines the calibration.

In the front interval of the rise time, the waveform is steep and the rate of increase in the amplitude is high. Therefore, the information processing apparatus 100 is able to shorten the pulse width of the microwave pulse signal. Further, since the amplitude is still low in the front interval, the influence on crosstalk and leakage transition is small. On the other hand, in the rear interval of the rise time, the amplitude is high, but the waveform is gentle and the rate of increase in the amplitude is low. Therefore, crosstalk and leakage transition are suppressed.

As described above, the information processing apparatus 100 is able to generate a microwave pulse signal having a short pulse width so as to suppress crosstalk and leakage transition, which improves the accuracy of quantum computation. In the second embodiment, the information processing apparatus 100 divides the rise time into two intervals, but may divide the rise time into three or more intervals. In that case, the waveform function includes three or more polynomials corresponding to the three or more intervals.

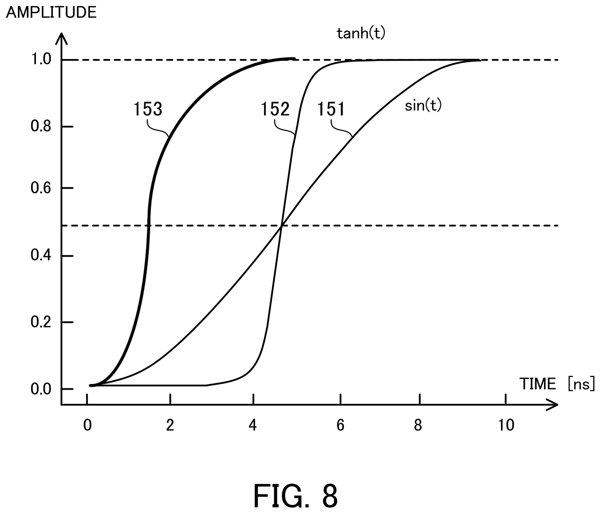

FIG. 8 illustrates examples of the rising edges of microwave pulse signals. A curve 151 represents a waveform during the rise time, generated by a sine function. A curve 152 represents a waveform during the rise time, generated by a hyperbolic tangent function (tanh function). A curve 153 represents a waveform during the rise time, generated by the waveform function of the second embodiment.

The curves 151 and 152 are symmetrical, whereas the curve 153 is not symmetrical. The curve 153 in FIG. 8 connects the two waveforms defined by two polynomials at a time point at which the amplitude reaches half of its maximum. The waveform in the front interval is steep, and the waveform in the rear interval is gentle. The rise time of the curve 153 is shorter than those of the curves 151 and 152. The waveform during the fall time may be either symmetrical or asymmetrical with respect to the rise time. In general, a microwave pulse signal implementing a quantum gate, the waveform during the fall time is symmetrical to that during the rise time.

For example, in the curve 151, the rise time is 10 nanoseconds, the time during which the amplitude is constant is 180 nanoseconds, and the fall time is 10 nanoseconds. Therefore, the pulse width is 200 nanoseconds. On the other hand, in the curve 153, the rise time is 5 nanoseconds, the time during which the amplitude is constant is 180 nanoseconds, and the fall time is 5 nanoseconds. Therefore, the pulse width is 190 nanoseconds. In this example, the pulse width obtained using the waveform function of the second embodiment is 5% shorter than that obtained using the sine function.

The waveform in the front interval of the rise time is defined by a polynomial f₁(t) represented by Expression (5), where t is the time point measured from the start of the microwave pulse signal, n₁ is the degree, and α_{1,n} is the coefficient of the n-th degree term. The waveform in the rear interval is defined by a polynomial f₂(t) represented by Expression (6), where T is the time point at which the rise time ends, n₂ is the degree, and α_{2,n} is the coefficient of the n-th degree term. The degree n₁ and the degree n₂ may be either the same or different. The degrees n₁ and n₂ may be specified by a user or may be optimized through parameter search. The coefficients α_{1,n} and α_{2,n} are parameters that are optimized through the parameter search. ${f}_{1} \left(t\right) = {\sum }_{n = 0}^{{n}_{1}} {α}_{1 , n} {t}^{n}$ ${f}_{2} \left(t\right) = {\sum }_{n = 0}^{{n}_{2}} {α}_{2 , n} {\left(t-T\right)}^{n}$

The entire waveform of the microwave pulse signal is defined by a waveform function f(t) presented in Expression (7), where tₘ is the time point corresponding to the boundary between the front interval and the rear interval, Aₘₐₓ is the maximum value of the amplitude, T' is the time point at which the fall time starts, and T" is the time point at which the pulse signal ends. The time tₘ may be specified by the user or may be optimized through parameter search. The times T' and T" and the amplitude Aₘₐₓ are specified by the user, for example. The duration from time 0 to time tₘ is the front interval, for which the polynomial f₁(t) is used. The duration from time tₘ to time T is the rear interval, for which the polynomial f₂(t) is used. During the duration from time T to time T', the amplitude is constant at Aₘₐₓ. During the duration from time T' to time T", a function f₃(t) is used. $f \left(t\right) = \left\{\begin{matrix}{f}_{1} \left(t\right) & 0 \leq t \leq {t}_{m} \\ {f}_{2} \left(t\right) & {t}_{m} < t \leq T \\ {A}_{max} & T < t \leq T ′ \\ {f}_{3} \left(t\right) & T ′ < t \leq T "\end{matrix}\right.$

The function f₃(t) represents a waveform during the fall time. The function f₃(t) generally represents a waveform symmetrical to those represented by the polynomials f₁(t) and f₂(t), and includes two polynomials. In this case, the waveform represented by the function f₃(t) corresponds to a waveform obtained by inverting the waveforms represented by the polynomials f₁(t) and f₂(t) on the time axis. However, for a microwave pulse signal for measurement, a function that represents a waveform asymmetrical to those represented by the polynomials f₁(t) and f₂(t) may be used as the function f₃(t). In this case, the function f₃(t) may be specified by the user. The function f₃(t) may be a non-polynomial function such as a sine function or a tanh function.

Since the amplitude of a microwave pulse signal starts from 0, α_{1,0} = 0. Further, since the amplitude of the microwave pulse signal reaches Aₘₐₓ at time T, α_{2,0} = Aₘₐₓ. There are n₁ + n₂ coefficients to be optimized. However, in the case where constraint conditions are imposed on the waveform in the front interval and the waveform in the rear interval, some of the n₁ + n₂ coefficients do not correspond to independent variables, whose values are determined independently of each other. In the case where there are n₃ constraint conditions, the number of independent variables is n₁ + n₂ - n₃.

For example, the polynomials f₁(t) and f₂(t) have the following five constraint conditions. Expression (8) represents a first constraint condition. The first constraint condition is that the waveform in the front interval and the waveform in the rear interval are connected at time tₘ. Expression (9) represents a second constraint condition. The second constraint condition is that the amplitude at time 0 is 0. ${f}_{1} \left({t}_{m}\right) = {f}_{2} \left({t}_{m}\right)$ ${f}_{1} \left(0\right) = 0$

Expression (10) represents a third constraint condition. The third constraint condition is that the slope of the waveform in the front interval at time tₘ is equal to the slope of the waveform in the rear interval at time tₘ, which means that the two waveforms are smoothly connected at time tₘ. Expression (11) represents a fourth constraint condition. The fourth constraint condition is that the slope of the waveform in the rear interval at time T is 0, which means that the waveform in the rear interval and the flat-top portion having a constant amplitude are smoothly connected. Expression (12) represents a fifth constraint condition. The fifth constraint condition is that the area B at the rise time is able to be set. The fifth constraint condition is imposed because the area of the entire waveform determines the amount of energy to be applied to a qubit. $\frac{{df}_{1} \left({t}_{m}\right)}{dt} = \frac{{df}_{2} \left({t}_{m}\right)}{dt}$ $\frac{{df}_{2} \left(T\right)}{dt} = 0$ ${\int }_{0}^{{t}_{m}} {f}_{1} \left(t\right) dt + {\int }_{{t}_{m}}^{T} {f}_{2} \left(t\right) dt = B$

Here, a method of calculating the values of dependent variables from the values of independent variables will be described. The following focuses on optimization of the coefficients included in the polynomials f₁(t) and f₂(t). As presented in Expression (13), the number of independent variables n is n₁ + n₂ - n₃, and the number of dependent variables is n₃. Among the n₃ dependent variables, m₁ dependent variables are the m₁ highest-degree coefficients among the coefficients included in the polynomial f₁ (t) . Also, among the n₃ dependent variables, m₂ dependent variables are the m₂ highest-degree coefficients among the coefficients included in the polynomial f₂(t). $n = {n}_{1} + {n}_{2} - {n}_{3} = {n}_{1} + {n}_{2} - \left({m}_{1}+{m}_{2}\right)$

By moving the terms including the dependent variables to the left-hand side and moving the terms including the independent variables and the constant terms to the righthand side, the first constraint condition represented by Expression (8) is transformed into Expression (14). Since the left-hand side of Expression (14) is a linear expression related to the dependent variables, Expression (14) is expressed as Expression (15), where c is a coefficient vector, x is a dependent variable vector, and y is a constant calculated from the values of the independent variables. Note here that the values of the independent variables have already been calculated, and thus the constant y is specifically calculated. The left-hand side of Expression (15) represents the inner product of the coefficient vector c and the dependent variable vector x. $\begin{matrix}- {\sum }_{n = {n}_{1} - {m}_{1} + 1}^{{n}_{1}} {α}_{1 , n} {\left({t}_{m}\right)}^{n} + {\sum }_{n = {n}_{2} - {m}_{2} + 1}^{{n}_{2}} {α}_{2 , n} {\left({t}_{m}-T\right)}^{n} \\ = {\sum }_{n = 0}^{{n}_{1} - {m}_{1}} {α}_{1 , n} {\left({t}_{m}\right)}^{n} - {\sum }_{n = 0}^{{n}_{2} - {m}_{2}} {α}_{2 , n} {\left({t}_{m}-T\right)}^{n}\end{matrix}$ $c ⋅ x = y$

A linear expression similar to Expression (15) is derived from other constraint conditions. By integrating a plurality of linear expressions derived from a plurality of constraint conditions, Expression (16) is generated, where C is an n₃ × n₃ coefficient matrix in which n₃ coefficient vectors c are arranged, and y is a constant vector in which n₃ constants are arranged. By calculating the inverse matrix of the coefficient matrix C, the information processing apparatus 100 is able to calculate the dependent variable vector x as presented in Expression (17). Alternatively, the information processing apparatus 100 may calculate a solution to Expression (16) using a linear solver that solves simultaneous equations. $C x = y$ $x = {C}^{- 1} y$

The information processing apparatus 100 optimizes the waveform of a microwave pulse signal corresponding to a quantum gate, using an optimized randomized benchmarking for immediate turn-up (ORBIT). ORBIT measures the average gate fidelity from execution results of the quantum computer 20 using the randomized benchmarking, and searches for parameter values that maximize the average gate fidelity, using the Nelder-Mead method.

ORBIT is described, for example, in the following non-patent literature: J. Kelly, R. Barends, B. Campbell, Y. Chen, Z. Chen, B. Chiaro, A. Dunsworth, A. G. Fowler, I. Hoi, E. Jeffrey, A. Megrant, J. Mutus, C. Neill, P. J. J. O'Malley, C. Quintana, P. Roushan, D. Sank, A. Vainsencher, J. Wenner, T. C. White, A. N. Cleland, and John M. Martinis, "Optimal Quantum Control Using Randomized Benchmarking", Physical Review Letters, Volume 112, Issue 24, June 2014.

However, the information processing apparatus 100 may calculate an index value other than the average gate fidelity as the evaluation value of the quantum gate, and may calculate the evaluation value using an evaluation algorithm other than the randomized benchmarking. In addition, the information processing apparatus 100 may optimize the parameter values using a search algorithm other than the Nelder-Mead method. In addition, the information processing apparatus 100 may adopt closed-loop optimization in which a measurement process and an update process are iteratively performed, as in ORBIT, or may adopt open-loop optimization in which optimal parameter values are estimated in a single iteration.

In ORBIT, the information processing apparatus 100 causes the quantum computer 20 to consecutively execute a quantum gate m times (m is an integer of 1 or more) and further execute a quantum gate that nullifies an ideal action of the m executions of the quantum gate. The information processing apparatus 100 then measures the qubit and determines whether the residual is zero. The information processing apparatus 100 repeatedly performs the above operation, and calculates the success probability that the residual is zero, and then calculates the fidelity corresponding to the number of iterations m from the success probability. The fidelity is an index representing the accuracy of quantum computation and is a real number in the range of 0 to 1, inclusive.

The information processing apparatus 100 repeatedly measures the fidelity while changing the number of iterations m, and fits a nonlinear curve representing the relationship between the number of iterations m and the fidelity. The information processing apparatus 100 estimates, from the nonlinear curve, the fidelity per execution of the quantum gate as the average gate fidelity. Accordingly, even in the case where the error of the quantum gate is small, the degree of the error is evaluated with high accuracy. The information processing apparatus 100 updates the parameter values so as to increase the average gate fidelity, using the Nelder-Mead method. The Nelder-Mead method will be described later.

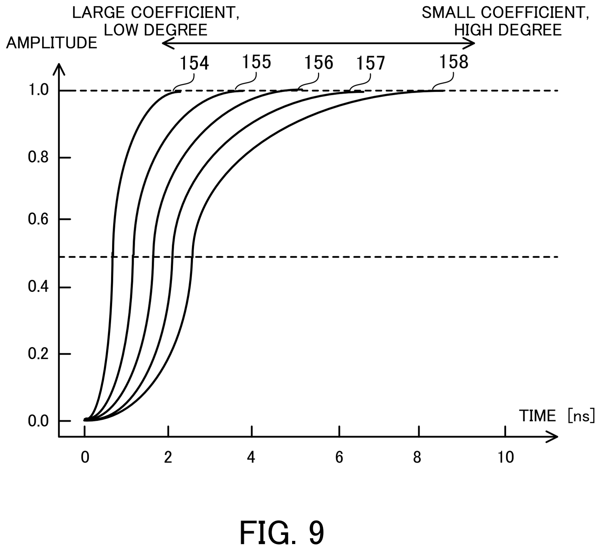

FIG. 9 illustrates examples of adjusting the rising edge of a microwave pulse signal. As described above, by defining the rising waveform using the polynomials having parameters as coefficients, the predictability of the relationship between the parameter values and the rising waveform is improved, and the optimization strategy becomes clearer. Curves 154, 155, 156, 157, and 158 represent waveforms generated by substituting different parameter values in the polynomials f₁(t) and f₂(t).

The curve 154 exhibits a relatively steep rise. The curve 155 exhibits a gentler rise than the curve 154. The curve 156 exhibits a gentler rise than the curve 155. The curve 157 exhibits a gentler rise than the curve 156. The curve 158 exhibits a gentler rise than the curve 157.

In general, the lower the degree of a polynomial, the more sharply the waveform rises, and the higher the degree of the polynomial, the gentler the waveform rises. In the case of the same degree, the larger the coefficient is, the more sharply the waveform rises, and the smaller the coefficient is, the gentler the waveform rises.

Therefore, when it is desired to generate a waveform with a steep rise such as the curve 154, the information processing apparatus 100 may reduce the degree or increase the coefficient. On the other hand, when it is desired to generate a waveform with a gentle rise such as the curve 158, the information processing apparatus 100 may increase the degree or decrease the coefficient. The above knowledge is also useful when a user specifies initial values for parameters or adjusts the behavior of a search algorithm. Accordingly, the information processing apparatus 100 is able to streamline the calibration to search for optimal parameter values.

The following describes a derivative removal by adiabatic gate (DRAG) method. The DRAG method suppresses errors caused due to leakage transitions. The DRAG method is described in, for example, the following non-patent literature: F. Motzoi, J. M. Gambetta, P. Rebentrost, and F. K. Wilhelm, "Simple Pulses for Elimination of Leakage in Weakly Nonlinear Qubits", Physics Review Letters, Volume 103, Issue 11, September 2009.

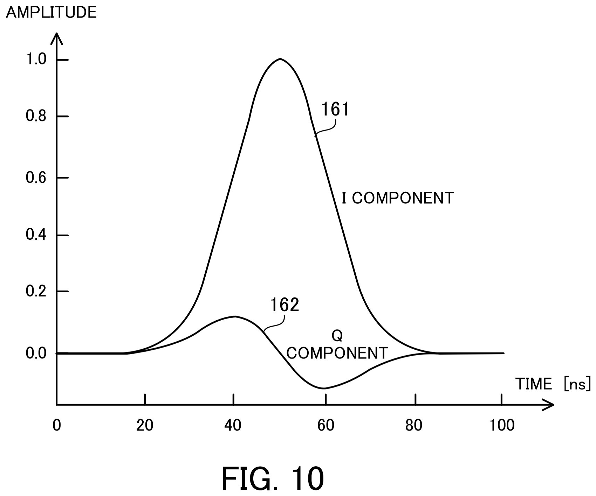

FIG. 10 illustrates examples of a main pulse signal and a correction pulse signal. In the DRAG method, the information processing apparatus 100 controls a microwave pulse signal to be applied to a qubit so that it includes a main pulse signal and a correction pulse signal that are orthogonal to each other. The main pulse signal may be referred to as an in-phase component or an I component. A curve 161 represents the main pulse signal. The correction pulse signal may be referred to as a quadrature-phase component or a Q component. A curve 162 represents the correction pulse signal.

The main pulse signal has a waveform defined by the above-described waveform function f(t). The correction pulse signal is a component orthogonal to the main pulse signal and has a differentiated waveform obtained by differentiating the waveform of the main pulse signal. Rising waveforms defined by the polynomials f₁(t) and f₂(t) are differentiable over the entire rise time. Therefore, the combination of the waveform function f(t) and the DRAG method is particularly useful from the viewpoint of improving the accuracy of quantum computation.

The Nelder-Mead method will now be described. In the Nelder-Mead method, the information processing apparatus 100 selects, from a parameter search space having a plurality of axes corresponding to a plurality of parameters, vertices the number of which is equal to the number of parameters plus one. Each vertex represents a vector in which parameter values, which are substituted for the plurality of parameters, are arranged. The information processing apparatus 100 searches for an optimal vertex using a simplex formed by the (number of parameters plus one) vertices.

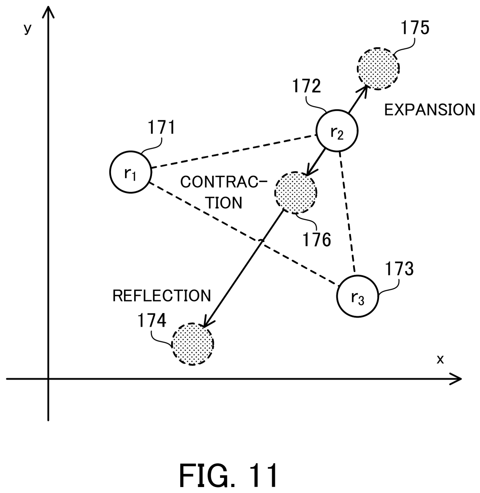

FIG. 11 illustrates examples of movement of a vertex of a simplex. The information processing apparatus 100 selects a plurality of vertices including vertices 171, 172, and 173. The information processing apparatus 100 calculates an evaluation value for each of the plurality of vertices. In the ORBIT of the second embodiment, the evaluation value of a vertex corresponds to the average gate fidelity of a waveform generated from the parameter values indicated by the vertex.

The information processing apparatus 100 moves a vertex having the worst evaluation value among the plurality of vertices, through reflection, expansion, or contraction. In the example of FIG. 11, the vertex having the worst evaluation value is the vertex 172. The reflection is an operation of moving the vertex 172 to the opposite side of the centroid of the other vertices than the vertex 172. A vertex 174 is the vertex after the reflection. The expansion is an operation of moving the vertex 172 away from the centroid. A vertex 175 is the vertex after the expansion. The contraction is an operation of moving the vertex 172 closer to the vertex having the best evaluation value. A vertex 176 is the vertex after the contraction. The Nelder-Mead method will be further described later.

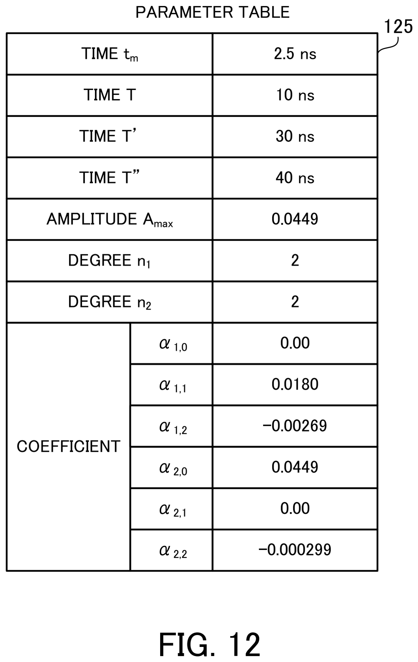

FIG. 12 illustrates an example of a parameter table. A parameter table 125 contains example parameter values. For some of the parameters contained in the parameter table 125, their parameter values may be specified by the user.

The parameter table 125 includes time tₘ, time T, time T', time T", amplitude Aₘₐₓ, degrees n₁ and n₂, and coefficients α_{1,0}, α_{1,1}, α_{1,2}, α_{2,0}, α_{2,1}, and α_{2,2}. For example, the time tₘ is 2.5 nanoseconds, the time T is 10 nanoseconds, the time T' is 30 nanoseconds, the time T" is 40 nanoseconds, the amplitude Aₘₐₓ is 0.0449, the degree n₁ is 2, and the degree n₂ is 2. The coefficient α_{1,0} is 0.00, the coefficient α_{1,1} is 0.0180, the coefficient α_{1,2} is -0.00269, the coefficient α_{2,0} is 0.0449, the coefficient α_{2,1} is 0.00, and the coefficient α_{2,2} is -0.000299. The rear interval of the rise time is longer than the front interval of the rise time. The waveform during the fall time is obtained by inverting the waveform during the rise time on the time axis.

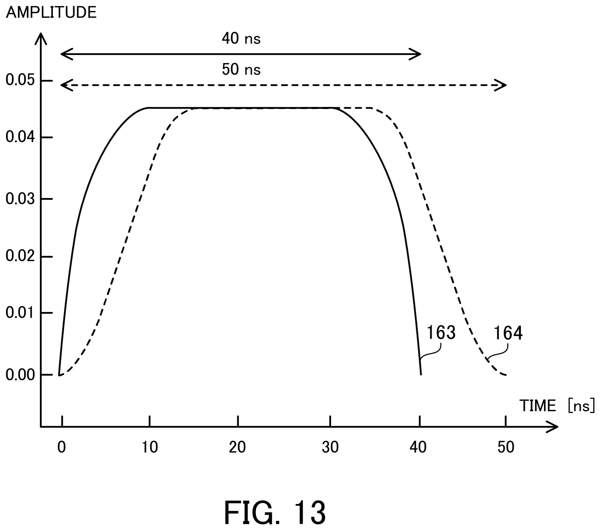

FIG. 13 illustrates an example of a comparison between the waveforms of microwave pulse signals. A curve 163 represents a waveform generated according to the parameter table 125 of FIG. 12. A curve 164 represents a waveform referred to as a raised cosine flat-top waveform.

In the waveform represented by the curve 163, the rise time is 10 nanoseconds, the flat-top portion is 20 nanoseconds, the fall time is 10 nanoseconds, and the entire pulse width is thus 40 nanoseconds. In addition, the waveform is steep during the first 2.5 nanoseconds of the rise time, and the waveform is gentle during the remaining 7.5 nanoseconds. The waveform is gentle during the first 7.5 nanoseconds of the fall time, and the waveform is steep during the remaining 2.5 nanoseconds.

On the other hand, in the waveform represented by the curve 164, the rise time is 15 nanoseconds, the flat-top portion is 20 nanoseconds, the fall time is 15 nanoseconds, and the entire pulse width is thus 50 nanoseconds. The waveform in the first half of the rise time and the waveform in the second half of the rise time are symmetrical, and the waveform in the first half of the fall time and the waveform in the second half of the fall time are symmetrical.

Thus, compared with the raised cosine flat-top waveform, the waveform of the curve 163 has the overall pulse width reduced by 10 nanoseconds. In addition, the slope is steep in an interval during which the amplitude is low, and the slope is gentle in an interval during which the amplitude is high. Therefore, the waveform of the curve 163 has a reduced pulse width, which makes it possible to suppress crosstalk and leakage transition caused by high-frequency components. Next, the functions and processing procedures of the information processing apparatus 100 and the structure of the pulse generation unit 24 will be described.

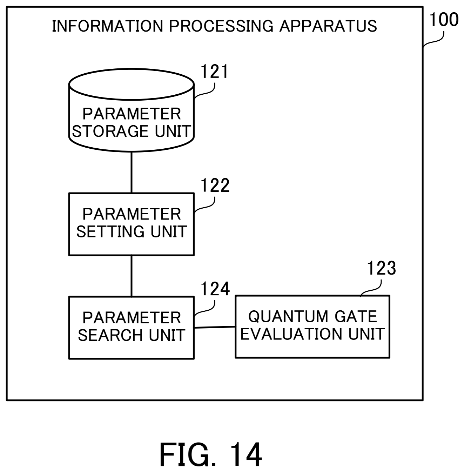

FIG. 14 is a block diagram illustrating an example of the functions of the information processing apparatus. The information processing apparatus 100 includes a parameter storage unit 121, a parameter setting unit 122, a quantum gate evaluation unit 123, and a parameter search unit 124. The parameter storage unit 121 is implemented by using, for example, the RAM 102 or the HDD 103. The parameter setting unit 122, the quantum gate evaluation unit 123, and the parameter search unit 124 are implemented by using, for example, the CPU 101 and a program.

The parameter storage unit 121 stores the parameter table 125. The parameter table 125 contains parameter values determined by the parameter search unit 124. The parameter table 125 may contain parameter values specified by the user.

The parameter setting unit 122 generates a waveform for a microwave pulse signal using a waveform function and the current parameter values. The parameter setting unit 122 transmits waveform data representing the generated waveform to the quantum computer 20. The waveform data indicates, for example, amplitudes at a plurality of time points. Thus, the waveform of the microwave pulse signal for a quantum gate is set in the quantum computer 20. The parameter setting unit 122 may also set a waveform for a microwave pulse signal for a measurement in the quantum computer 20.

The quantum gate evaluation unit 123 causes the quantum computer 20 to execute the quantum gate under the waveform currently set in the quantum computer 20. The quantum gate evaluation unit 123 reads the measurement value of the qubit after the execution of the quantum gate from the quantum computer 20 and statistically processes the measurement value to calculate the average gate fidelity of the quantum gate. The quantum gate evaluation unit 123 may evaluate the accuracy of the measurement of the qubit.

The parameter search unit 124 updates the parameter values set in the waveform function so as to increase the average gate fidelity calculated by the quantum gate evaluation unit 123. When the parameter values are updated, the parameter setting unit 122 generates a new waveform using the updated parameter values and transmits waveform data representing the new waveform to the quantum computer 20. The parameter search unit 124 may store the updated parameter values in a non-volatile storage, may display the updated parameter values on the display device 111, or may transmit the updated parameter values to another information processing apparatus.

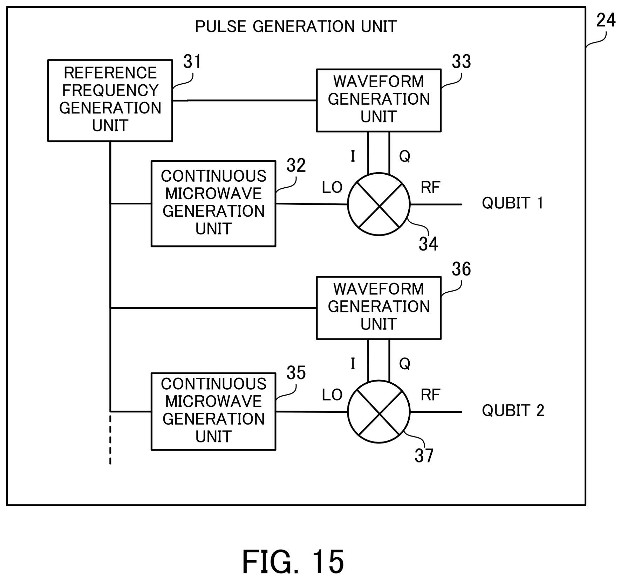

FIG. 15 is a block diagram illustrating an example of hardware of the pulse generation unit. The pulse generation unit 24 includes a reference frequency generation unit 31, a plurality of continuous microwave generation units, a plurality of waveform generation units, and a plurality of mixers 34 and 37. The plurality of continuous microwave generation units correspond to a plurality of qubits and include a continuous microwave generation unit 32 corresponding to a first qubit and a continuous microwave generation unit 35 corresponding to a second qubit. The plurality of waveform generation units correspond to the plurality of qubits and include a waveform generation unit 33 corresponding to the first qubit and a waveform generation unit 36 corresponding to the second qubit. The plurality of mixers correspond to the plurality of qubits and include the mixer 34 corresponding to the first qubit and the mixer 37 corresponding to the second qubit.

The reference frequency generation unit 31 generates a synchronization signal for synchronizing hardware components within the pulse generation unit 24. The reference frequency generation unit 31 transmits the synchronization signal to the continuous microwave generation units 32 and 35 and the waveform generation units 33 and 36. The continuous microwave generation unit 32 generates a continuous microwave having a constant amplitude and a constant frequency, and transmits the continuous microwave to the mixer 34. Similarly, the continuous microwave generation unit 35 generates a continuous microwave and transmits it to the mixer 37.

In order to irradiate the first qubit with a microwave pulse signal, the waveform generation unit 33 generates signals having waveforms indicated by the waveform data received from the information processing apparatus 100. In the example of FIG. 15, the waveform data represents a waveform of an I component and a waveform of a Q component. The waveform generation unit 33 transmits a signal indicating the waveform of the I component and a signal indicating the waveform of the Q component to the mixer 34. Similarly, in order to irradiate the second qubit with a microwave pulse signal, the waveform generation unit 36 generates signals having waveforms indicated by waveform data. The waveform generation unit 36 transmits a signal indicating a waveform of the I component and a signal indicating a waveform of the Q component to the mixer 37.

The mixer 34 is a signal converter having an LO port, an I port, a Q port, and an RF port. The mixer 34 receives the continuous microwave via the LO port and duplicates the continuous microwave into a continuous microwave for the I component and a continuous microwave for the Q component. The mixer 34 receives the waveform signal via the I port and multiplies the continuous microwave by the waveform signal received via the I port. Thus, the amplitude of the continuous microwave is limited by the waveform received via the I port. The mixer 34 also receives the waveform signal via the Q port and multiplies the continuous microwave by the waveform signal received via the Q port. Thus, the amplitude of the continuous microwave is limited by the waveform received via the Q port.

The mixer 34 combines the I component and the Q component to generate a microwave pulse signal, and outputs the microwave pulse signal from the RF port. The microwave pulse signal output from the mixer 34 is applied to the first qubit. Similarly, the mixer 37 receives a continuous microwave via the LO port, receives waveform signals via the I port and the Q port, and outputs a microwave pulse signal from the RF port. The microwave pulse signal output from the mixer 37 is applied to the second qubit.

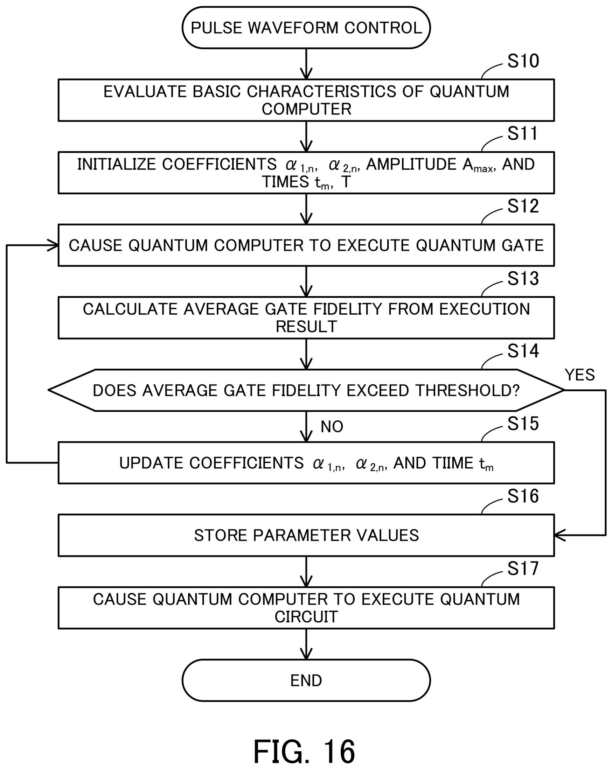

FIG. 16 is a flowchart illustrating an example procedure for pulse waveform control. In step S10, the quantum gate evaluation unit 123 evaluates the basic characteristics of the quantum computer 20. The basic characteristics include, for example, a qubit drive frequency, a qubit readout frequency, a coherence time, and others. The quantum gate evaluation unit 123 may calculate the basic characteristic values by causing the quantum computer 20 to execute quantum computation and acquiring execution results. The quantum gate evaluation unit 123 may acquire the basic characteristic values by reading the basic characteristic values stored in the quantum computer 20 or the information processing apparatus 100.

In step S11, the parameter setting unit 122 generates a waveform function. The parameter setting unit 122 initializes the coefficients α_{1,n} and α_{2,n}, the amplitude Aₘₐₓ, and the times tₘ and T included in the waveform function. The initial values may be specified by the user or may be determined based on the evaluation result of the basic characteristics obtained in step S10. The parameter setting unit 122 generates a waveform from the waveform function and transmits waveform data to the quantum computer 20.

In step S12, the quantum gate evaluation unit 123 causes the quantum computer 20 to execute a quantum gate. In step S13, the quantum gate evaluation unit 123 reads the execution result of the quantum gate from the quantum computer 20. The quantum gate evaluation unit 123 analyzes the execution result of the quantum gate and calculates an average gate fidelity.

In step S14, the parameter search unit 124 determines whether the average gate fidelity exceeds a threshold. The threshold is specified by the user, for example. If the average gate fidelity exceeds the threshold, the process proceeds to step S16. If the average gate fidelity is less than or equal to the threshold, the process proceeds to step S15.

In step S15, the parameter search unit 124 updates the coefficients α_{1,n} and α_{2,n} and the time tₘ so as to increase the average gate fidelity. The parameter search unit 124 uses the Nelder-Mead method to select new parameter values. The parameter setting unit 122 generates a waveform from the waveform function with the updated parameter values, and transmits waveform data to the quantum computer 20. Then, the process returns to step S12.

In step S16, the parameter setting unit 122 stores the parameter values that yield the best average gate fidelity among the tested parameter values, in the parameter storage unit 121. In step S17, the information processing apparatus 100 receives a quantum circuit from the user. The information processing apparatus 100 causes the calibrated quantum computer 20 to execute the quantum circuit.

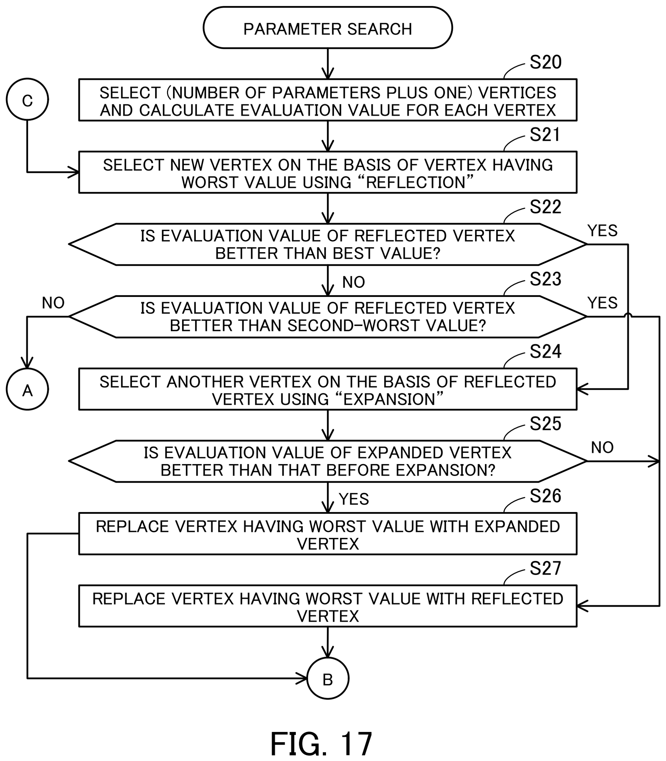

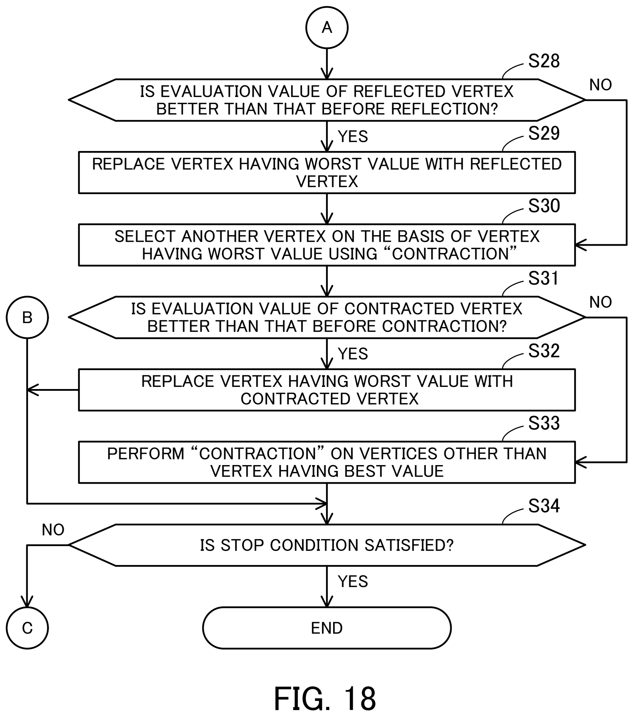

FIG. 17 is a flowchart illustrating an example procedure for parameter search. The parameter search in FIGS. 17 and 18 is based on the Nelder-Mead method. The parameter search in FIGS. 17 and 18 is executed in steps S12 to S15 described above. In step S20, the parameter search unit 124 selects vertices the number of which is equal to the number of parameters plus one, from the parameter search space. The quantum gate evaluation unit 123 calculates an evaluation value for each selected vertex. In the context of the pulse waveform control of FIG. 16, the evaluation value corresponds to the average gate fidelity.

In step S21, the parameter search unit 124 selects a vertex having the worst value among the plurality of vertices. The parameter search unit 124 calculates the centroid of the other vertices than the vertex having the worst value. The parameter search unit 124 selects a new vertex on the basis of the vertex having the worst value using "reflection". The reflected vertex is located on the opposite side of the vertex having the worst value across the centroid. The quantum gate evaluation unit 123 calculates the evaluation value of the reflected vertex.

In step S22, the parameter search unit 124 determines whether the evaluation value of the reflected vertex is better than the best value of the plurality of vertices. If the evaluation value of the reflected vertex is better than the best value, the process proceeds to step S24. Otherwise, the process proceeds to step S23. In step S23, the parameter search unit 124 determines whether the evaluation value of the reflected vertex is better than the second-worst evaluation value of the plurality of vertices. If the evaluation value of the reflected vertex is better than the second-worst evaluation value, the process proceeds to step S27. Otherwise, the process proceeds to step S28.

In step S24, the parameter search unit 124 selects another vertex on the basis of the reflected vertex using "expansion". The expanded vertex is located in a direction opposite to the centroid relative to the reflected vertex. The quantum gate evaluation unit 123 calculates the evaluation value of the expanded vertex. In step S25, the parameter search unit 124 determines whether the evaluation value of the expanded vertex is better than that before the expansion. If the evaluation value of the expanded vertex is better than that before the expansion, the process proceeds to step S26. Otherwise, the process proceeds to step S27.

In step S26, the parameter search unit 124 replaces the vertex having the worst value with the expanded vertex to update the simplex. Then, the process proceeds to step S34. In step S27, the parameter search unit 124 replaces the vertex having the worst value with the reflected vertex to update the simplex. Then, the process proceeds to step S34.

FIG. 18 is a flowchart illustrating a continuation of the example procedure for the parameter search. In step S28, the parameter search unit 124 determines whether the evaluation value of the reflected vertex is better than that before the reflection. If the evaluation value of the reflected vertex is better than that before the reflection, the process proceeds to step S29. Otherwise, the process proceeds to step S30. In step S29, the parameter search unit 124 replaces the vertex having the worst value with the reflected vertex to update the simplex.

In step S30, the parameter search unit 124 selects another vertex on the basis of the vertex having the worst value using "contraction". The contracted vertex is located in a direction from the vertex having the worst value toward the vertex having the best value. The quantum gate evaluation unit 123 calculates the evaluation value of the contracted vertex. In step S31, the parameter search unit 124 determines whether the evaluation value of the contracted vertex is better than that before the contraction. If the evaluation value of the contracted vertex is better than that before the contraction, the process proceeds to step S32. Otherwise, the process proceeds to step S33.

In step S32, the parameter search unit 124 replaces the vertex having the worst value with the contracted vertex to update the simplex. Then, the process proceeds to step S34. In step S33, the parameter search unit 124 performs "contraction" on the other vertices than the vertex having the best value to move these vertices closer to the vertex having the best value.

In step S34, the parameter search unit 124 determines whether a stop condition is satisfied. The stop condition is that the number of iterations has reached a specified number or a vertex having an evaluation value better than a threshold has been found. If the stop condition is satisfied, the parameter search is completed. In this case, the parameter values indicated by the vertex having the best evaluation value are the optimal parameter values. If the stop condition is not satisfied, the process returns to step S21.

As described above, the information processing apparatus 100 according to the second embodiment divides the rise time into two intervals: the front interval and the rear interval, and defines the waveform in the front interval and the waveform in the rear interval using different polynomials. The information processing apparatus 100 optimizes the polynomial coefficients so that the slope of the waveform in the front interval is large and the slope of the waveform in the rear interval is small.

By using the polynomials in the waveform function, the information processing apparatus 100 is able to represent the waveform with a small number of parameters and suppress the expansion of the parameter search space. Therefore, the information processing apparatus 100 is able to reduce the calibration load and shorten the calibration time. Further, since the polynomial coefficients are parameters, the relationship between the parameter values and the waveform becomes simple. This improves the predictability of a change in the waveform resulting from a change in the parameter values, and streamlines the calibration.

In the front interval of the rise time, the waveform is steep and the rate of increase in the amplitude is high. Therefore, the information processing apparatus 100 is able to generate a microwave pulse signal with a reduced pulse width. Further, since the amplitude is still low in the front interval, the influence on crosstalk and leakage transition is small. On the other hand, in the rear interval of the rise time, the amplitude is high, but the waveform is gentle and the rate of increase in the amplitude is low. Therefore, crosstalk and leakage transition are suppressed.

In one aspect, it is possible to reduce the number of parameters for a pulse signal that controls a qubit.

In any of the above aspects, the various features may be implemented in hardware, or as software modules running on one or more processors/computers.

The present disclosure also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

## Claims

1. A computer program that causes a computer to perform a process comprising:
generating a waveform function (13) defining a waveform of a pulse signal, the waveform function defining a temporal change in amplitude in a first interval of a rise time of the pulse signal using a first polynomial (14) and defining a temporal change in the amplitude in a second interval of the rise time using a second polynomial (15), the first polynomial including a first parameter as a coefficient, the second polynomial including a second parameter as a coefficient;
determining a first waveform (17) using the waveform function by assigning a first parameter value group (16) to a parameter group including the first parameter and the second parameter; and
changing a parameter value group assigned to the parameter group, from the first parameter value group to a second parameter value group (18), based on a result of quantum computation performed by a quantum computer using a first pulse signal having the first waveform.

2. The computer program according to claim 1, wherein
the second interval is an interval after the first interval, and
a rate of increase in the amplitude in the second interval is lower than a rate of increase in the amplitude in the first interval.

3. The computer program according to any of the preceding claims, wherein
the first interval and the second interval are continuous, and
the parameter group (125) further includes a third parameter representing a time point (tₘ) corresponding to a boundary between the first interval and the second interval.

4. The computer program according to any of the preceding claims, wherein the changing includes changing at least one of a degree (n₁) of the first polynomial and a degree (n₂) of the second polynomial.

5. The computer program according to any of the preceding claims, wherein the changing includes iteratively performing a calculation process (S13) of calculating a fidelity of a quantum gate implemented by the first pulse signal and an update process (S15) of changing the parameter value group so as to improve the fidelity.

6. The computer program according to any of the preceding claims, wherein the first pulse signal includes a first component representing the first waveform (161) and a second component representing a differentiated waveform (162) obtained by differentiating the first waveform, the first component and the second component being orthogonal to each other.

7. A computer-readable storage medium having the computer program of any of the preceding claims stored thereon.

8. A qubit control method executed by a computer, the qubit control method comprising:
generating a waveform function (13) defining a waveform of a pulse signal, the waveform function defining a temporal change in amplitude in a first interval of a rise time of the pulse signal using a first polynomial (14) and defining a temporal change in the amplitude in a second interval of the rise time using a second polynomial (15), the first polynomial including a first parameter as a coefficient, the second polynomial including a second parameter as a coefficient;
determining a first waveform (17) using the waveform function by assigning a first parameter value group (16) to a parameter group including the first parameter and the second parameter; and
changing a parameter value group assigned to the parameter group, from the first parameter value group to a second parameter value group (18), based on a result of quantum computation performed by a quantum computer using a first pulse signal having the first waveform.

9. An information processing apparatus comprising:
storage means (11) configured to store a waveform function (13) defining a waveform of a pulse signal, the waveform function defining a temporal change in amplitude in a first interval of a rise time of the pulse signal using a first polynomial (14) and defining a temporal change in the amplitude in a second interval of the rise time using a second polynomial (15), the first polynomial including a first parameter as a coefficient, the second polynomial including a second parameter as a coefficient; and
processing means (12) configured to:
determine a first waveform (17) using the waveform function by assigning a first parameter value group (16) to a parameter group including the first parameter and the second parameter; and
change a parameter value group assigned to the parameter group, from the first parameter value group to a second parameter value group (18), based on a result of quantum computation performed by a quantum computer using a first pulse signal having the first waveform.
